# EUROPEAN PATENT SPECIFICATION

(11) **EP 3 817 476 B1**
(45) Date of publication and mention of the grant of the patent: **30.08.2023**
(21) Application number: 19802494.5
(22) Date of filing: 17.04.2019
(51) Int. Cl.: H04B 7/0404, H04B 7/0456, H04B 7/06, H04W 56/00, H04L 5/00, H04W 72/04

(54) **UPLINK DATA TRANSMISSION INDICATION METHOD, TERMINAL, AND NETWORK SIDE DEVICE**
VERFAHREN ZUR UPLINK-DATENÜBERTRAGUNG, ENDGERÄT UND NETZWERKSEITIGE VORRICHTUNG
PROCÉDÉ D'INDICATION DE TRANSMISSION DE DONNÉES DE LIAISON MONTANTE, TERMINAL, ET DISPOSITIF CÔTÉ RÉSEAU

(30) Priority: 18.05.2018 CN 201810479803
(43) Date of publication of application: 05.05.2021
(73) Proprietor: Vivo Mobile Communication Co., Ltd., Dongguan, Guangdong 523860 (CN)
(72) Inventor: YANG, Yu, Dongguan, Guangdong 523860 (CN); SUN, Peng, Dongguan, Guangdong 523860 (CN)
(74) Representative: Lavoix
(86) International application number: PCT/CN2019/083021
(87) International publication number: WO 2019/218832

(56) References cited:
- WO-A1-2020/167070
- CN-A- 102 714 527
- CN-A- 104 734 763
- CN-A- 107 360 625
- US-A1- 2017 237 479
- US-A1- 2018 091 992
- SAMSUNG: "Discussion on beam indication for UL transmission", 3GPP DRAFT; R1-1715962, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 17 September 2017 (2017-09-17), XP051339421, Retrieved from the Internet: URL:http://www.3gpp.org/ftp/Meetings_3GPP_ SYNC/RAN1/Docs/ [retrieved on 2017-09-17]
- INTEL CORPORATION: "On Codebook Based UL Transmission", 3GPP DRAFT; R1-1802391 ON CODEBOOK BASED UL TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 17 February 2018 (2018-02-17), XP051397916, Retrieved from the Internet: URL:http://www.3gpp.org/ftp/tsg%5Fran/WG1% 5FRL1/TSGR1%5F92/Docs/ [retrieved on 2018-02-17]
- SAMSUNG: "Codebook-based UL transmission", 3GPP DRAFT; R1-1720282 NR UL CB-BASED TX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 17 November 2017 (2017-11-17), XP051368931, Retrieved from the Internet: URL:http://www.3gpp.org/ftp/tsg%5Fran/WG1% 5FRL1/TSGR1%5F91/Docs/ [retrieved on 2017-11-17]
- INTEL CORPORATION: "On Codebook Based UL Transmission", 3GPP TSG RAN WG1 Meeting #92 Rl-1802391, vol. RAN WG1, 17 February 2018 (2018-02-17), - 2 March 2018 (2018-03-02), XP051397916,

## Description

### TECHNICAL FIELD

Embodiments of this disclosure relate to the field of wireless communications technologies, and in particular, to an uplink data transmission indication method, a terminal, and a network side device.

### BACKGROUND

Radio access technical standards such as Long Term Evolution (Long Term Evolution, LTE)/LTE-Advanced (LTE-Advanced, LTE-A) are all constructed based on multiple-input multiple-output (Multiple-Input Multiple-Output, MIMO) + orthogonal frequency division multiplexing (Orthogonal Frequency Division Multiplexing, OFDM) technologies. The MIMO technology improves a peak rate and system spectrum utilization by using a spatial degree of freedom available in a multiple-antenna system.

It can be predicted that in a future 5G mobile communications system, a larger-scale MIMO technology with more antenna ports will be introduced. A massive (Massive) MIMO technology uses a large-scale antenna array, and can greatly improve system band utilization and support more users in access.

In the massive MIMO technology, if an all-digital array is used, maximum spatial resolution and optimal multi-user multiple-input multiple-output (Multi-User MIMO, MU-MIMO) performance can be achieved. However, this structure requires a large number of digital-to-analog/analog-to-digital (AD/DA) converters and a large number of complete radio frequency-baseband processing channels. As a result, both device costs and baseband processing complexity cause huge burden.

To reduce implementation costs and device complexity, a digital-analog hybrid beamforming technology emerges. That is, based on traditional digital-domain beamforming, a stage of beamforming is added for a radio frequency signal near a front end of an antenna system. Analog forming can roughly match a transmitted signal with a channel in a relatively simple manner. A dimension of an equivalent channel formed by analog forming is less than an actual number of antennas. Therefore, a number of AD/DA converters and a number of digital channels required subsequently and corresponding baseband processing complexity can be all reduced greatly. Partial residual interference in analog forming may be processed again in a digital domain to ensure quality of MU-MIMO transmission. Compared with all-digital forming, digital-analog hybrid beamforming is a solution that balances performance and complexity, and has bright practical prospect in a high-band system with large bandwidth or a system with a very large number of antennas.

In analog beamforming, full-bandwidth transmission is performed, and an array element in each polarization direction on a panel of each antenna array can send an analog beam only in a time division multiplexing manner. In related art, an analog beamforming vector is usually trained in a polling manner, that is, an array element in each polarization direction of each antenna panel sends a training signal (that is, a candidate forming vector) in turn at an agreed time point in a time division multiplexing manner. A terminal feeds back a beam report after measurement (beam reporting), so that an analog beam is transmitted on a network side by using the training signal in a next transmission service.

In related art, an optimal uplink transmit beam can be found through downlink beam training or uplink beam training. After the optimal uplink transmit beam is determined, a network side device may schedule a terminal to send a physical uplink shared channel (Physical Uplink Shared Channel, PUSCH) by using downlink control information (Downlink Control Information, DCI). The DCI carries transmission parameters such as a sounding reference signal indicator (Sounding Reference Signal Indicator, SRI), a codebook, and a rank required for transmitting the PUSCH.

The related art has not defined how to indicate the transmission parameter of the PUSCH for the terminal when the network side device configures no sounding reference signal indicator (Sounding Reference Signal Indicator, SRS) resource for the terminal. In addition, although the network side device configures an SRS resource for the terminal, the related art limits that when the SRS resource is configured, a maximum of only two SRIs, that is, two uplink transmit beam indicators, can be supported. As a result, there are fewer available uplink beams and the transmission parameter of the PUSCH is inaccurately determined.

Document D1 (SAMSUNG: "Discussion on beam indication for UL transmission", 3GPP DRAFT; R1-1715962, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Nagoya, Japan; 20170918-20170921) discloses the concept of indicator state, which refers to as QCL Indicator (QI). Each QI provides a reference to one or two RS sets, which indicates a QCL relationship for one or two DMRS port group(s). Each RS set consists of one or more RSs such that each RS within the set may be associated with different QCL parameters, e.g., one RS may be associated with spatial QCL while another RS may be associated with other QCL parameters, etc. Document D2 (INTEL CORPORATION: "On Codebook Based UL Transmission", 3GPP DRAFT; R1-1802391 ON CODEBOOK BASED UL TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20180226 - 20180302) discloses that for multi-beam based UE, e.g. for FR2 case, without SRS transmission, the gNB has to find out one possible way for PUSCH beam indication. One possible way is that the PUSCH beam indication can be based on one PUCCH beam. Another possible way is to indicate the PUSCH beam by DCI, e.g. to use SRI for BM or SSB index/CRI. However this would increase the overhead of DCI. Therefore the simple way for PUSCH beam indication without SRS is to reuse one PUCCH beam.

### SUMMARY

Embodiments of this disclosure provide an uplink data transmission indication method, a terminal, and a network side device, to resolve a problem that when a network side device configures no SRS resource for a terminal, how to schedule uplink data transmission, and a problem that although an SRS resource is configured, indication of a transmission parameter of uplink data transmission is inaccurate.

According to a first aspect, an embodiment of this disclosure provides an uplink data transmission indication method according to the appended set of claims.

According to a second aspect, an embodiment of this disclosure provides an uplink data transmission indication method according to the appended set of claims.

According to a third aspect, an embodiment of this disclosure provides a terminal according to the appended set of claims.

According to a fourth aspect, an embodiment of this disclosure provides a network side device according to the appended set of claims.

In the embodiments of this disclosure, the CRI field and/or the SSBRI field may be used to indicate a transmission parameter required in uplink data transmission, and when the network side device configures no SRS resource for the terminal, the transmission parameter of uplink data transmission can still be indicated for the terminal. In addition, because the CRI field and/or the SSBRI field may have a maximum of dozens of values, indication of the transmission parameter of uplink data transmission can be more accurate.

### BRIEF DESCRIPTION OF DRAWINGS

It becomes clear for a person of ordinary skill in the art to learn various other advantages and benefits by reading detailed description of the following optional implementation manners. Accompanying drawings are merely used for showing the optional implementation manners, and are not considered as a limitation on this disclosure. In all accompanying drawings, a same reference symbol is used to indicate a same part. In the accompanying drawings:
FIG. 1 is a schematic architectural diagram of a wireless communications system according to an embodiment of this disclosure;
FIG. 2 is a schematic diagram of an uplink data transmission indication method applied to a terminal according to an embodiment of this disclosure;
FIG. 3 is a schematic diagram of an uplink data transmission indication method applied to a terminal according to another embodiment of this disclosure;
FIG. 4 is a schematic diagram of an uplink data transmission indication method applied to a terminal according to still another embodiment of this disclosure;
FIG. 5 is a schematic diagram of an uplink data transmission indication method applied to a network side device according to an embodiment of this disclosure;
FIG. 6 is a schematic structural diagram of a terminal according to an embodiment of this disclosure;
FIG. 7 is a schematic structural diagram of a network side device according to an embodiment of this disclosure;
FIG. 8 is a schematic structural diagram of a terminal according to another embodiment of this disclosure;
FIG. 9 is a schematic structural diagram of a terminal according to still another embodiment of this disclosure; and
FIG. 10 is a schematic structural diagram of a network side device according to another embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some but not all of the embodiments of this disclosure. All other embodiments obtained by a person of ordinary skill in the art based on the embodiments of this disclosure without creative efforts shall fall within the protection scope of this disclosure as defined by the appended claims.

The term "include" and any variants thereof in the specification and claims of this application mean to cover the non-exclusive inclusion, for example, a process, method, system, product, or device that includes a list of steps or units is not necessarily limited to those clearly listed steps or units, but may include other steps or units not clearly listed or inherent to such a process, method, product, or device. In addition, "and/or" used in the specification and claims means at least one of connected objects. For example, A and/or B represents the following three cases: Only A exists, only B exists, and both A and B exist.

In the embodiments of this disclosure, the word such as "exemplary" or "example" is used to represent giving an example, an illustration, or a description. Any embodiment or design scheme described as an "exemplary" or "example" in the embodiments of this disclosure should not be explained as being more preferred or having more advantages than another embodiment or design scheme. Exactly, use of the word such as "exemplary" or "example" is intended to present a concept in a specific manner.

The following describes the embodiments of this disclosure with reference to the accompanying drawings. An uplink data transmission indication method, a terminal, and a network side device provided in the embodiments of this disclosure may be applied to a wireless communications system. The wireless communications system may be a 5G system, an evolved long term evolution (Evolved Long Term Evolution, eLTE) system, or a subsequent evolved communications system.

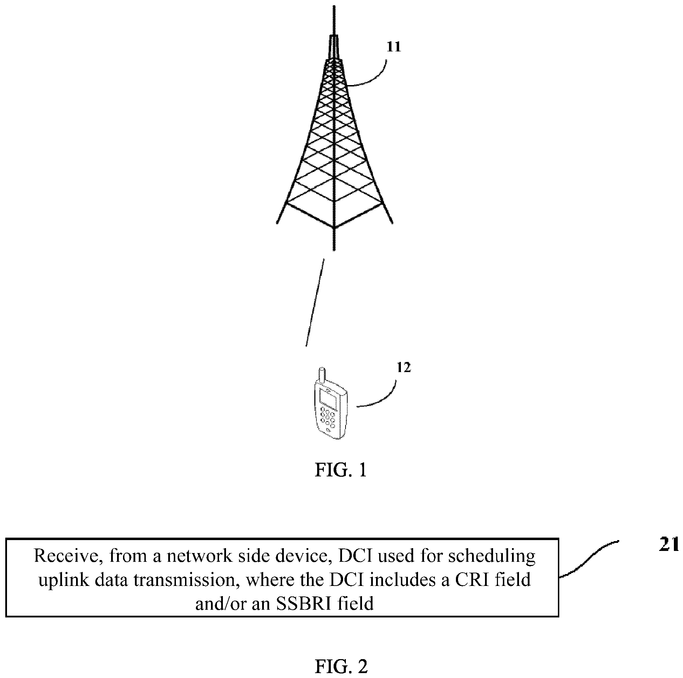

FIG. 1 is a schematic structural diagram of a wireless communications system according to an embodiment of this disclosure. As shown in FIG. 1, the wireless communications system may include: a network side device 11 and a terminal. For example, the terminal is denoted as UE 12, and the UE 12 may be connected to the network side device 11. In actual application, a connection between the devices is a wireless connection. For ease of visually indicating a connection relationship between the devices, solid lines are used for illustration in FIG. 1.

It should be noted that the foregoing communications system may include a plurality of UEs, and the network side device may communicate with the plurality of UEs (transmit signaling or data).

The network side device 11 provided in this embodiment of this disclosure may be a base station. The base station may be a common base station, or may be an evolved NodeB (evolved node base station, eNB), or may be a device such as a network side device in a 5G system (for example, a next-generation node (next generation node base station, gNB)) or a transmission and reception point (transmission and reception point, TRP) or a cell, or may be a network side device in a subsequent evolved communications system. The terms used constitute no limitation.

The UE 12 provided in this embodiment of this disclosure may be a mobile phone, a tablet computer, a notebook computer, an ultra-mobile personal computer (Ultra-Mobile Personal Computer, UMPC), a netbook, a personal digital assistant (Personal Digital Assistant, PDA), or the like. A person skilled in the art may understand that the terms used constitute no limitation.

Referring to FIG. 2, FIG. 2 is a schematic diagram of an uplink data transmission indication method according to the claimed embodiment of this disclosure. The method is applied to a terminal and includes:

Step 21: Receive, from a network side device, DCI used for scheduling uplink data transmission, where the DCI includes a CRI field and/or an SSBRI field.

In this embodiment of this disclosure, the CRI field and/or the SSBRI field is used to indicate a transmission parameter required in uplink data transmission, and when the network side device configures no SRS resource for the terminal, the transmission parameter of uplink data transmission can still be indicated for the terminal. In addition, because the CRI field and/or the SSBRI field may have a maximum of dozens of values, indication of the transmission parameter of uplink data transmission can be more accurate.

In this embodiment of this disclosure, the CRI field and/or the SSBRI field is used to indicate an optimal uplink transmit beam required in uplink data transmission. If the CRI field is used to indicate the optimal uplink transmit beam required in uplink data transmission, the CRI field carries a CSI-RS resource (corresponding to an optimal downlink transmit beam) indicator. The terminal may use a downlink receive beam direction corresponding to the optimal downlink transmit beam as the optimal uplink transmit beam according to the CSI-RS resource indicator. If the SSBRI field is used to indicate the optimal uplink transmit beam required in uplink data transmission, the SSBRI field carries an SSB resource (corresponding to an optimal downlink transmit beam) indicator. The terminal may use a downlink receive beam direction corresponding to the optimal downlink transmit beam as the optimal uplink transmit beam according to the SSB resource indicator. In this embodiment of this disclosure, it should be noted that the terminal has a beam correspondence (beam correspondence) capability, and the downlink receive beam direction of the corresponding optimal downlink transmit beam may be used as the optimal uplink transmit beam.

In this embodiment of this disclosure, before the step of receiving, from a network side device, DCI used for scheduling uplink data transmission, the method further includes: receiving first configuration information from the network side device, where the first configuration information includes a group of CSI-RS resources and/or SSB resources used to indicate the optimal uplink transmit beam. That is, before the network side device indicates, by using the CRI field and/or the SSBRI field in the DCI, the optimal uplink transmit beam required in uplink data transmission, a group of CSI-RS resources or SSB resources is configured, and the group of CSI-RS resources and/or SSB resources is used to indicate the optimal uplink transmit beam. In this manner, overheads of the DCI can be reduced. For example, there are a total of 64 CSI-RS resources. Therefore, 6 bits are required to indicate all the CSI-RS resources. If 16 resources are selected from the 64 CSI-RS resources as a group of CSI-RS resources indicating the optimal uplink transmit beam, the group of CSI-RS resources may be numbered again. In this way, all CSI-RS resources in the group of CSI-RS resources may be indicated by 4 bits, thereby reducing overheads of the DCI. In this embodiment of this disclosure, the network side device may send the first configuration information by using high-layer signaling. Resources quantity and which resources in the group of CSI-RS resources and/or SSB resources used to indicate the optimal uplink transmit beam are all determined by the network side device.

During uplink data transmission, in addition to the optimal uplink transmit beam, a TPMI and/or an RI used for uplink data transmission also needs to be determined. Specifically, uplink data transmission is performed in two manners: codebook (codebook) and non-codebook (non-codebook). When the codebook manner is used for uplink data transmission, the TPMI and the RI used for uplink data transmission need to be determined. When the non-codebook manner is used for uplink data transmission, the RI used for uplink data transmission needs to be determined.

In this embodiment of this disclosure, optionally, the DCI further carries the TPMI and/or the RI used for uplink data transmission. It should be noted that the TPMI is used to indicate a precoding matrix and the RI is used to indicate a rank. In this embodiment of this disclosure, this constitutes no limitation, and other terms may be used to indicate a precoding matrix or a rank. These all fall within the protection scope of this application.

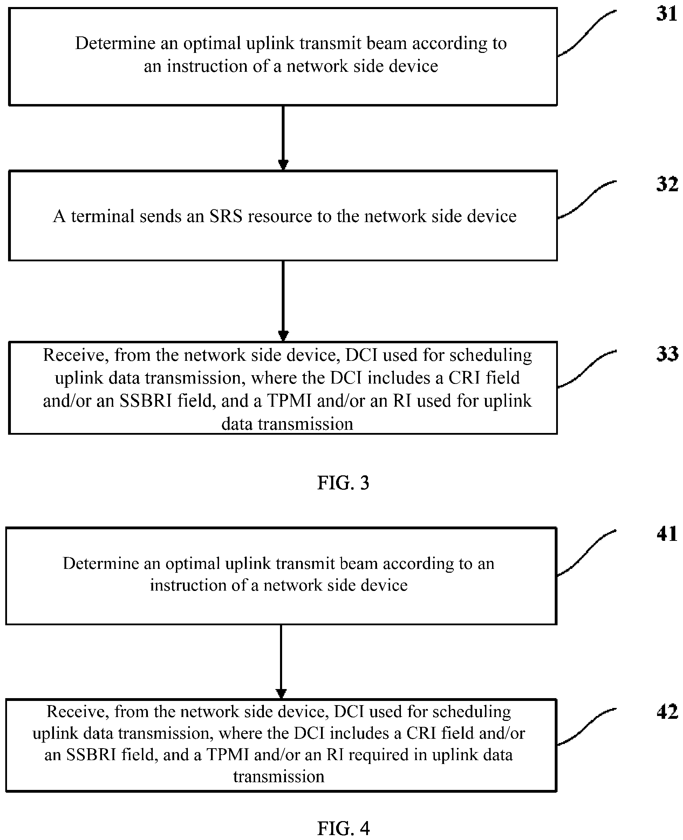

FIG. 3 is a schematic flowchart of an uplink data transmission indication method according to an embodiment of this disclosure. The uplink data transmission indication method is applied to a terminal and includes:

Step 31: Determine an optimal uplink transmit beam according to an instruction of a network side device.

In this embodiment of this disclosure, the network side device may train an analog beamforming vector in a polling manner. That is, an array element in each polarization direction of each antenna panel sends a training signal (that is, a candidate forming vector) in turn at an agreed time point in a time division multiplexing manner, and the terminal feeds back a beam report after measurement.

The network side device configures setting information of the beam report for the terminal by using high-layer signaling. The setting information includes: content information of the beam report, a time-domain-related message of the beam report (periodic, aperiodic, or semi-persistent), frequency domain granularity (frequency granularity) information of the beam report, and the like. The content information of the beam report may include: identification information of at least one optimal uplink transmit beam selected by the terminal, a physical layer measurement result of the beam selected by the terminal, packet information of the beam selected by the terminal, and the like.

Specifically, when the terminal has a beam correspondence (beam correspondence) capability, the network side device may determine an optimal downlink transmit beam through downlink beam training, and inform the terminal by carrying a CRI and/or an SSBRI in DCI. In this way, the terminal may use a downlink receive beam direction corresponding to the optimal downlink transmit beam as the optimal uplink transmit beam.

Alternatively, in a non-claimed embodiment, if the network side device configures an SRS resource, the network side device may further determine the optimal uplink transmit beam through uplink beam training, and inform, by carrying an SRI in the DCI, the terminal of a sounding reference signal (Sounding Reference Signal, SRS) resource corresponding to the optimal uplink transmit beam. In this way, the terminal may learn of the optimal uplink transmit beam.

Step 32: The terminal sends an SRS resource to the network side device.

If the network side device configures the SRS resource for the terminal, the network side device may obtain, by measuring the SRS resource sent by the terminal, information such as an uplink codebook and a rank required in uplink data transmission.

Step 33: Receive, from the network side device, DCI used for scheduling uplink data transmission, where the DCI includes a CRI field and/or an SSBRI field, and a TPMI and/or an RI used for uplink data transmission, and the CRI field and/or the SSBRI field is used to indicate the optimal uplink transmit beam required in uplink data transmission.

In this embodiment of this disclosure, the uplink data transmission indication method mainly includes three stages: a first stage of determining the optimal uplink transmit beam, a second stage of measuring the optimal uplink transmit beam, and a third stage of scheduling uplink data transmission according to a measurement result.

FIG. 4 is a schematic flowchart of an uplink data transmission indication method according to an embodiment of this disclosure. The data transmission indication method is applied to a terminal and includes:
Step 41: Determine an optimal uplink transmit beam according to an instruction of a network side device.

Specifically, when the terminal has a beam correspondence (beam correspondence) capability, the network side device may determine an optimal downlink transmit beam through downlink beam training, and inform the terminal by carrying a CRI and/or an SSBRI in DCI. In this way, the terminal may use a downlink receive beam direction corresponding to the optimal downlink transmit beam as the optimal uplink transmit beam.

Alternatively, in a non-claimed embodiment, if the network side device configures an SRS resource, the network side device may further determine the optimal uplink transmit beam through uplink beam training, and inform the terminal by carrying an SRI in the DCI. In this way, the terminal may learn of the optimal uplink transmit beam.

Step 42: Receive, from the network side device, DCI used for scheduling uplink data transmission, where the DCI includes a CRI field and/or an SSBRI field, and a TPMI and/or an RI used for uplink data transmission, and the CRI field and/or the SSBRI field is used to indicate the optimal uplink transmit beam required in uplink data transmission.

In this embodiment of this disclosure, the uplink data transmission indication method mainly includes two stages: a first stage of determining the optimal uplink transmit beam, and a second stage of receiving, from the network side device, the DCI used for scheduling uplink data transmission. In this embodiment of this disclosure, measurement stages of the optimal uplink transmit beam are reduced.

In the foregoing embodiment, because measurement of the optimal uplink transmit beam based on an indication of the SRS resource in step 32 is not performed, the network side device may determine information such as the TPMI and/or the RI through measurement of an uplink DMRS and/or another SRS resource that is performed before current scheduling. However, the TPMI and/or the RI determined by the network side device in this case may be inaccurate, affecting robustness of a communications system.

To improve robustness of the communications system, in this embodiment of this disclosure, optionally, when codebook transmission is used for uplink data transmission, an uplink codebook indicated by the TPMI carried in the DCI used for scheduling uplink data transmission is a non-coherent (non-coherent) codebook. The uplink codebook may include three types: a non-coherent codebook, a partial coherent (partial coherent) codebook, and a coherent (coherent) codebook. The non-coherent codebook is more conservative. When the optimal uplink transmit beam is not measured, the use of the non-coherent codebook can ensure robustness of the communications system to the greatest extent and obtain better system performance.

To improve robustness of the communications system, in this embodiment of this disclosure, optionally, a value of a rank indicated by the RI is 1, that is, uplink data transmission is restricted to single-layer transmission. Similarly, when the value of rank is 1, robustness of the communications system can be ensured to the greatest extent.

The uplink codebook is mainly determined based on three factors: one factor is a type of a codebook (the non-coherent codebook, the partial coherent codebook, and the coherent codebook), one factor is the value of the rank, and the remaining factor is a port quantity required in uplink data transmission. Therefore, to accurately determine the uplink codebook, in this embodiment of this disclosure, before the step of receiving, from a network side device, DCI used for scheduling uplink data transmission, the method further includes: receiving second configuration information from the network side device, where the second configuration information includes information used to determine the TPMI, and the information used to determine the TPMI at least includes port quantity information required in uplink data transmission.

In the foregoing embodiment, the network side device determines the TPMI and/or the RI used for uplink data transmission. Certainly, in some other embodiments of this disclosure, the terminal may alternatively determine the TPMI and/or the RI used for uplink data transmission.

In this embodiment of this disclosure, when the network side device configures the SRS resource for the terminal, the DCI used for scheduling uplink data transmission may further include an SRI field or an SRI-RI field.

Optionally, an SRS resource indicated in the SRI field is used to determine a port quantity required in uplink data transmission, an SRS resource indicated in the SRI-RI field is used to determine a port quantity required in uplink data transmission, and an RI indicated in the SRI-RI field is used to determine an RI required in uplink data transmission. In this embodiment of this disclosure, different SRS resources may correspond to different port quantities required in uplink data transmission, and the network side device may carry SRS resource indication information in the SRI field or the SRI-RI field to indicate the port quantity required in uplink data transmission, to facilitate the terminal in determining the uplink codebook.

In this embodiment of this disclosure, optionally, after the step of receiving, from a network side device, DCI used for scheduling uplink data transmission, the method further includes: determining whether to perform uplink data transmission. That is, after receiving the DCI used for scheduling uplink data transmission, the terminal may determine whether to perform uplink data transmission. This is applicable to, for example, a case in which before or during measurement of the optimal uplink transmit beam, the terminal receives the DCI used for scheduling uplink data transmission. In this case, a transmission parameter of uplink data transmission indicated in the DCI may be inaccurate. In this case, the terminal may determine not to perform uplink data transmission.

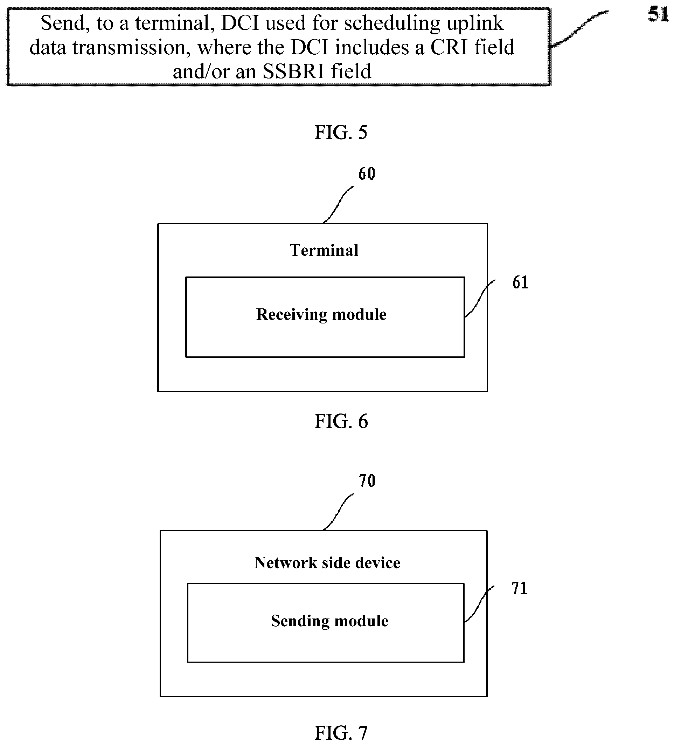

Referring to FIG. 5, an embodiment of this disclosure further provides an uplink data transmission indication method, applied to a network side device and including:

Step 51: Send, to a terminal, DCI used for scheduling uplink data transmission, where the DCI includes a CRI field and/or an SSBRI field.

In this embodiment of this disclosure, the CRI field and/or the SSBRI field is used to indicate a transmission parameter required in uplink data transmission, and when the network side device configures no SRS resource for the terminal, the transmission parameter of uplink data transmission can still be indicated for the terminal. In addition, because the CRI field and/or the SSBRI field may have a maximum of dozens of values, indication of the transmission parameter of uplink data transmission can be more accurate.

In this embodiment of this disclosure, the CRI field and/or the SSBRI field is used to indicate an optimal uplink transmit beam required in uplink data transmission.

In this embodiment of this disclosure, before the step of sending, to a terminal, DCI used for scheduling uplink data transmission, the method further includes: sending first configuration information to the terminal, where the first configuration information includes a group of CSI-RS resources and/or SSB resources used to indicate the optimal uplink transmit beam.

In this embodiment of this disclosure, optionally, the DCI further carries the TPMI and/or the RI used for uplink data transmission.

In this embodiment of this disclosure, optionally, an uplink codebook indicated by the TPMI is a non-coherent codebook.

In this embodiment of this disclosure, optionally, a value of a rank indicated by the RI is 1.

In this embodiment of this disclosure, optionally, before the step of sending, to a terminal, DCI used for scheduling uplink data transmission, the method further includes: sending second configuration information to the terminal, where the second configuration information includes information used to determine the TPMI, and the information used to determine the TPMI at least includes port quantity information required in uplink data transmission.

In this embodiment of this disclosure, optionally, before the step of sending, to a terminal, DCI used for scheduling uplink data transmission, the method further includes: measuring an uplink demodulation reference signal (demodulation reference signal, DMRS) and/or an SRS sent by the terminal, and determining, according to a measurement result, the TPMI and/or the RI required in uplink data transmission. In this embodiment of this disclosure, if the network side device configures no SRS resource for the terminal, the network side device may measure the uplink DMRS. If the network side device configures the SRS resource, the network side device may measure the uplink DMRS and/or the SRS sent by the terminal.

In this embodiment of this disclosure, optionally, the DCI further includes an SRI field or an SRI-RI field.

In this embodiment of this disclosure, optionally, an SRS resource indicated in the SRI field is used to determine a port quantity required in uplink data transmission, an SRS resource indicated in the SRI-RI field is used to determine a port quantity required in uplink data transmission, and an RI indicated in the SRI-RI field is used to determine an RI required in uplink data transmission.

The following separately describes the uplink data transmission indication method in this embodiment of this disclosure when uplink data transmission is performed in a codebook transmission manner and a non-codebook transmission manner.
(1) Uplink data transmission is performed in a codebook transmission manner
   A) A network side device sends, to a terminal, DCI used for scheduling uplink data transmission, where the DCI includes a CRI field and/or an SSBRI field.
   A1) Before the DCI used for scheduling uplink data transmission is sent, first configuration information is sent to the terminal by using high-layer signaling, where the first configuration information includes a group of CSI-RS resources and/or SSB resources used to indicate the optimal uplink transmit beam. Resources quantity and which resources in the group of CSI-RS resources and/or SSB resources are determined by the network side device.
   A2) The CRI field and/or the SSBRI field is used to indicate an optimal uplink transmit beam required in uplink data transmission.
   B) The DCI further includes the TPMI and/or the RI used for uplink data transmission.
   B1) An uplink codebook indicated by the TPMI is a non-coherent codebook.
   B2) A value of a rank indicated by the RI is 1.
   B3) Before the DCI used for scheduling uplink data transmission is sent to the terminal, second configuration information is sent to the terminal, where the second configuration information includes information used to determine the TPMI, and the information used to determine the TPMI at least includes port quantity information required in uplink data transmission.
   A3) The TPMI and/or the RI required in uplink data transmission and not indicated by the network side device is determined by the terminal.
(2) Uplink data transmission is performed in a non-codebook transmission manner
   A) A network side device sends, to a terminal, DCI used for scheduling uplink data transmission, where the DCI includes a CRI field and/or an SSBRI field.
   A1) Before the DCI used for scheduling uplink data transmission is sent, first configuration information is sent to the terminal by using high-layer signaling, where the first configuration information includes a group of CSI-RS resources and/or SSB resources used to indicate the optimal uplink transmit beam. Resources quantity and which resources in the group of CSI-RS resources and/or SSB resources are determined by the network side device.
   A2) The CRI field and/or the SSBRI field is used to indicate an optimal uplink transmit beam required in uplink data transmission.
   B) The DCI further includes the RI used for uplink data transmission.
   B1) A value of a rank indicated by the RI is 1.
   A3) The RI required in uplink data transmission and not indicated by the network side device is determined by the terminal.

Referring to FIG. 6, an embodiment of this disclosure further provides a terminal 60, including:
a receiving module 61, configured to receive, from a network side device, DCI used for scheduling uplink data transmission, where the DCI includes a CRI field and/or an SSBRI field.

In this embodiment of this disclosure, the CRI field and/or the SSBRI field may be used to indicate a transmission parameter required in uplink data transmission, and when the network side device configures no SRS resource for the terminal, the transmission parameter of uplink data transmission can still be indicated for the terminal. In addition, because the CRI field and/or the SSBRI field may have a maximum of dozens of values, indication of the transmission parameter of uplink data transmission can be more accurate.

In this embodiment of this disclosure, the CRI field and/or the SSBRI field is used to indicate an optimal uplink transmit beam required in uplink data transmission.

In this embodiment of this disclosure, the receiving module 61 is further configured to receive first configuration information from a network side device, where the first configuration information includes a group of CSI-RS resources and/or SSB resources used to indicate the optimal uplink transmit beam.

In this embodiment of this disclosure, optionally, the DCI further carries the TPMI and/or the RI used for uplink data transmission.

In this embodiment of this disclosure, optionally, an uplink codebook indicated by the TPMI is a non-coherent codebook.

In this embodiment of this disclosure, optionally, a value of a rank indicated by the RI is 1.

In this embodiment of this disclosure, optionally, the receiving module 61 is further configured to receive second configuration information from the network side device, where the second configuration information includes information used to determine the TPMI, and the information used to determine the TPMI at least includes port quantity information required in uplink data transmission.

In this embodiment of this disclosure, optionally, the terminal 60 further includes: a first determining module, configured to determine the TPMI and/or the RI required in uplink data transmission.

In this embodiment of this disclosure, optionally, the DCI further includes an SRI field or an SRI-RI field.

In this embodiment of this disclosure, optionally, an SRS resource indicated in the SRI field is used to determine a port quantity required in uplink data transmission, an SRS resource indicated in the SRI-RI field is used to determine a port quantity required in uplink data transmission, and an RI indicated in the SRI-RI field is used to determine an RI required in uplink data transmission.

In this embodiment of this disclosure, optionally, the terminal 60 may further include: a second determining module, configured to determine whether to perform uplink data transmission.

Referring to FIG. 7, an embodiment of this disclosure further provides a network side device 70, including:

a sending module 71, configured to send, to a terminal, DCI used for scheduling uplink data transmission, where the DCI includes a CRI field and/or an SSBRI field.

In this embodiment of this disclosure, the CRI field and/or the SSBRI field may be used to indicate a transmission parameter required in uplink data transmission, and when the network side device configures no SRS resource for the terminal, the transmission parameter of uplink data transmission can still be indicated for the terminal. In addition, because the CRI field and/or the SSBRI field may have a maximum of dozens of values, indication of the transmission parameter of uplink data transmission can be more accurate.

In this embodiment of this disclosure, the CRI field and/or the SSBRI field is used to indicate an optimal uplink transmit beam required in uplink data transmission.

In this embodiment of this disclosure, the sending module 71 is further configured to send first configuration information to the terminal, where the first configuration information includes a group of CSI-RS resources and/or SSB resources used to indicate the optimal uplink transmit beam.

In this embodiment of this disclosure, optionally, the DCI further carries the TPMI and/or the RI used for uplink data transmission.

In this embodiment of this disclosure, optionally, an uplink codebook indicated by the TPMI is a non-coherent codebook.

In this embodiment of this disclosure, optionally, a value of a rank indicated by the RI is 1.

In this embodiment of this disclosure, optionally, the sending module 71 is further configured to send second configuration information to the terminal, where the second configuration information includes information used to determine the TPMI, and the information used to determine the TPMI at least includes port quantity information required in uplink data transmission.

In this embodiment of this disclosure, optionally, the network side device 70 may further include: a measurement module, configured to: measure an uplink demodulation reference signal DMRS and/or an SRS sent by the terminal, and determine, according to a measurement result, a TPMI and/or an RI required in uplink data transmission.

In this embodiment of this disclosure, optionally, the DCI further includes an SRI field or an SRI-RI field.

In this embodiment of this disclosure, optionally, an SRS resource indicated in the SRI field is used to determine a port quantity required in uplink data transmission, an SRS resource indicated in the SRI-RI field is used to determine a port quantity required in uplink data transmission, and an RI indicated in the SRI-RI field is used to determine an RI required in uplink data transmission.

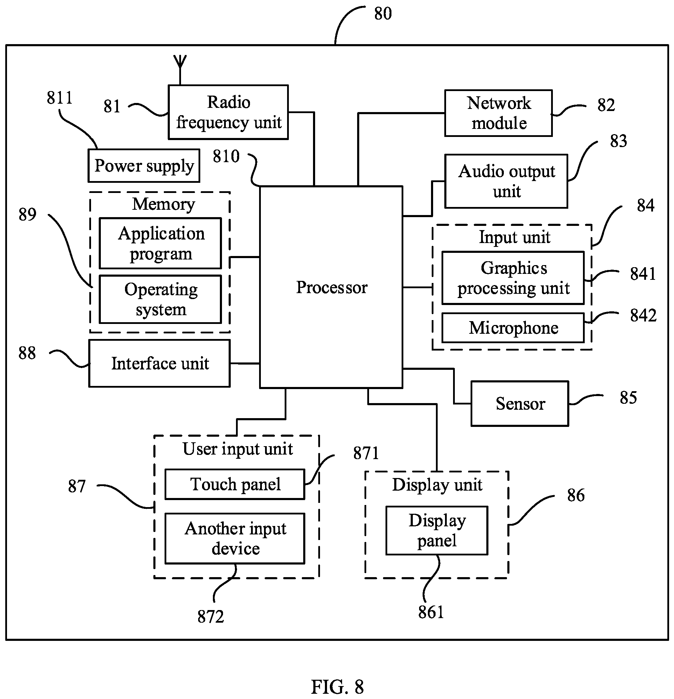

Referring to FIG. 8, FIG. 8 is a schematic structural diagram of a terminal according to another embodiment of this disclosure. The terminal 80 includes, but is not limited to, components such as a radio frequency unit 81, a network module 82, an audio output unit 83, an input unit 84, a sensor 85, a display unit 86, a user input unit 87, an interface unit 88, a memory 89, a processor 810, and a power supply 811. It can be understood by those skilled in the art that the structure of the terminal shown in FIG. 8 does not constitute a limitation on the terminal, and the terminal may include more or fewer components than those shown in the figure, or combine some components, or have different component arrangements. In the embodiments of this disclosure, the terminal includes, but is not limited to, a mobile phone, a tablet computer, a notebook computer, a palmtop computer, a vehicle-mounted terminal, a wearable device, a pedometer, or the like.

The radio frequency unit 81 is configured to receive, from a network side device, DCI used for scheduling uplink data transmission, where the DCI includes a CRI field and/or an SSBRI field.

In this embodiment of this disclosure, the CRI field and/or the SSBRI field is used to indicate a transmission parameter required in uplink data transmission, and when the network side device configures no SRS resource for the terminal, the transmission parameter of uplink data transmission can still be indicated for the terminal. In addition, because the CRI field and/or the SSBRI field may have a maximum of dozens of values, indication of the transmission parameter of uplink data transmission can be more accurate.

It should be understood that in this embodiment of this disclosure, the radio frequency unit 81 may be configured to receive and send signals in a process of receiving and sending information or calling. Specifically, the radio frequency unit 81 receives downlink data from a base station for processing by the processor 810, and sends uplink data to the base station. Generally, the radio frequency unit 81 includes, but is not limited to, an antenna, at least one amplifier, a transceiver, a coupler, a low noise amplifier, a duplexer, and the like. In addition, the radio frequency unit 81 may further communicate with a network and other devices through a wireless communications system.

The terminal provides wireless broadband Internet access to a user through the network module 82, for example, helps the user receive and send e-mails, browse web pages, and access streaming media.

The audio output unit 83 may convert audio data received by the radio frequency unit 81 or the network module 82 or stored in the memory 89 into an audio signal, and output the audio signal as sound. Moreover, the audio output unit 83 may further provide audio output (for example, call signal receiving sound and message receiving sound) related to a specific function performed by the terminal 80. The audio output unit 83 includes a speaker, a buzzer, a receiver, and the like.

The input unit 84 is configured to receive an audio signal or a video signal. The input unit 84 can include a graphics processing unit (Graphics Processing Unit, GPU) 841 and a microphone 842. The graphics processing unit 841 processes image data of static pictures or videos acquired by an image capturing apparatus (for example, a camera) in a video capturing mode or an image capturing mode. A processed image frame may be displayed on the display unit 86. The image frames processed by the graphics processing unit 841 can be stored in the memory 89 (or another storage medium) or send by the radio frequency unit 81 or the network module 82. The microphone 842 can receive sound and can process such sound into audio data. The processed audio data may be converted in a telephone call mode into a format that can be sent by the radio frequency unit 81 to a mobile communications base station for output.

The terminal 80 further includes at least one sensor 85, for example, a light sensor, a motion sensor, and other sensors. Specifically, the light sensor includes an ambient light sensor and a proximity sensor, where the ambient light sensor can adjust brightness of the display panel 861 according to brightness of ambient light, and the proximity sensor can turn off the display panel 861 and/or backlight when the terminal 80 moves towards the ear. As a type of the motion sensor, an accelerometer sensor may detect an acceleration in each direction (generally, three axes), and detect a value and a direction of gravity when the accelerometer sensor is static, and may be configured to recognize a terminal posture (such as screen switching between landscape and portrait modes, a related game, or magnetometer posture calibration), perform a function related to vibration recognition (such as a pedometer or a knock), and the like. The sensor 85 may further include a fingerprint sensor, a pressure sensor, an iris sensor, a molecule sensor, a gyroscope, a barometer, a hygrometer, a thermometer, an infrared sensor, and the like. Details are not described herein again.

The display unit 86 is configured to display information input by a user or information provided to a user. The display unit 86 can include a display panel 861. The display panel 861 can be configured in a form of liquid crystal display (Liquid Crystal Display, LCD), organic light-emitting diode (Organic Light-Emitting Diode, OLED), and the like.

The user input unit 87 may be configured to receive inputted digit or character information and generate key signal input related to user setting and function control of the terminal. Specifically, the user input unit 87 includes a touch panel 871 and another input device 872. The touch panel 871 is also referred to as a touchscreen, and may collect a touch operation performed by the user on or near the touch panel 871 (such as an operation performed by the user on the touch panel 871 or near the touch panel 871 by using any proper object or accessory such as a finger or a stylus). The touch panel 871 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, sends the touch point coordinates to the processor 810, and receives and executes a command sent by the processor 810. In addition, the touch panel 871 can be implemented by using multiple types such as a resistance type, a capacitance type, infrared rays, and surface acoustic waves. In addition to the touch panel 871, the user input unit 87 may also include the another input device 872. Specifically, the another input device 872 may include, but is not limited to, a physical keyboard, functional keys (for example, a volume control key and a switch key), a trackball, a mouse, and a joystick. Details are not described herein again.

Further, the touch panel 871 may cover the display panel 861. When the touch panel 871 detects a touch operation on or near the touch panel 871, the touch operation is transmitted to the processor 810 to determine a type of a touch event, and then the processor 810 provides corresponding visual output on the display panel 861 according to the type of the touch event. In FIG. 8, the touch panel 871 and the display panel 861 are used as two independent components to implement input and output functions of the terminal. However, in some embodiments, the touch panel 871 and the display panel 861 may be integrated to implement the input and output functions of the terminal. This is not specifically limited herein.

The interface unit 88 is an interface connecting an external apparatus to the terminal 80. For example, the external apparatus can include a wired or wireless headphone port, an external power supply (or a battery recharger) port, a wired or wireless data port, a memory card port, a port for connection with an apparatus having an identification module, an audio input/output(I/O) port, a video I/O port, an earphone port, and the like. The interface unit 88 may be configured to receive input (for example, data information and power) from an external apparatus and transmit the received input to one or more elements within the terminal 80, or may be configured to transmit data between the terminal 80 and the external apparatus.

The memory 89 may be configured to store software programs and various data. The memory 89 may mainly include a program storage area and a data storage area. The program storage area may store an operating system, an application program required by at least one function (such as a voice playing function and an image playing function), and the like, and the data storage area may store data (such as audio data and a phone book) created based on use of the mobile phone, and the like. In addition, the memory 89 may include a high-speed random access memory, and may also include a non-volatile memory, such as at least one magnetic disk storage device, a flash memory device, or other volatile solid-state memory devices.

The processor 810 is a control center of the terminal. The processor 810 uses various interfaces and lines to connect the various parts of the entire terminal, and performs various functions of the terminal and processes data by running or executing software programs and/or modules stored in the memory 89 and invoking data stored in the memory 89, to monitor the terminal as a whole. The processor 810 may include one or more processing units. Optionally, the processor 810 may integrate an application processor and a modem processor. The application processor mainly deals with an operating system, a user interface, an application program, and the like. The modem processor mainly deals with wireless communication. It can be understood that alternatively, the modem processor may not be integrated into the processor 810.

The terminal 80 may also include the power supply 811 (for example, a battery) that supplies power to various components. Optionally, the power supply 811 may be logically connected to the processor 810 through a power supply management system, to perform functions of managing charging, discharging, and power consumption through the power supply management system.

In addition, the terminal 80 includes some functional modules not shown. Details are not described herein again.

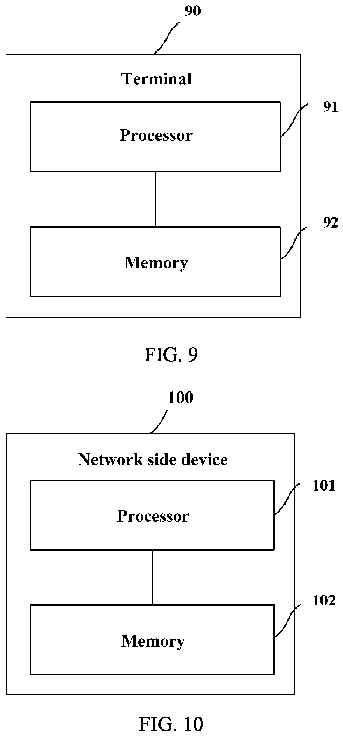

FIG. 9 is a schematic structural diagram of a terminal according to still another embodiment of this disclosure. The terminal 90 includes: a processor 91 and a memory 92. In this embodiment of this disclosure, the terminal 90 further includes: a computer program stored in the memory 92 and executable on the processor 91. When the computer program is executed by the processor 91, the following steps are performed: receiving, from a network side device, DCI used for scheduling uplink data transmission, where the DCI includes a CRI field and/or an SSBRI field.

The processor 91 is responsible for management of a bus architecture and general processing. The memory 92 can store data used by the processor 91 during an operation.

The CRI field and/or the SSBRI field is used to indicate an optimal uplink transmit beam required in uplink data transmission.

When the computer program is executed by the processor 91, the following step is further performed: receiving first configuration information from a network side device, where the first configuration information includes a group of CSI-RS resources and/or SSB resources used to indicate the optimal uplink transmit beam.

Optionally, the DCI further carries the TPMI and/or the RI used for uplink data transmission.

Optionally, an uplink codebook indicated by the TPMI is a non-coherent codebook.

Optionally, a value of a rank indicated by the RI is 1.

Optionally, when the computer program is executed by the processor 91, the following step may be further performed: receiving second configuration information from the network side device, where the second configuration information includes information used to determine the TPMI, and the information used to determine the TPMI at least includes port quantity information required in uplink data transmission.

Optionally, when the computer program is executed by the processor 91, the following step may be further performed: determining the TPMI and/or the RI required in uplink data transmission.

Optionally, the DCI further includes an SRI field or an SRI-RI field.

Optionally, an SRS resource indicated in the SRI field is used to determine a port quantity required in uplink data transmission, an SRS resource indicated in the SRI-RI field is used to determine a port quantity required in uplink data transmission, and an RI indicated in the SRI-RI field is used to determine an RI required in uplink data transmission.

FIG. 10 is a schematic structural diagram of a network side device according to another embodiment of this disclosure. The network side device 100 includes: a processor 101 and a memory 102. In this embodiment of this disclosure, the network side device 100 further includes: a computer program stored in the memory 102 and executable on the processor 101. When the computer program is executed by the processor 101, the following step is performed: sending, to the terminal, DCI used for scheduling uplink data transmission, where the DCI includes a CRI field and/or an SSBRI field.

The processor 101 is responsible for management of a bus architecture and general processing. The memory 102 can store data used by the processor 101 during an operation.

The CRI field and/or the SSBRI field is used to indicate an optimal uplink transmit beam required in uplink data transmission.

When the computer program is executed by the processor 101, the following step is further performed: sending first configuration information to the terminal, where the first configuration information includes a group of CSI-RS resources and/or SSB resources used to indicate the optimal uplink transmit beam.

Optionally, the DCI further carries the TPMI and/or the RI used for uplink data transmission.

Optionally, an uplink codebook indicated by the TPMI is a non-coherent codebook.

Optionally, a value of a rank indicated by the RI is 1.

Optionally, when the computer program is executed by the processor 101, the following step may be further performed: sending second configuration information to the terminal, where the second configuration information includes information used to determine the TPMI, and the information used to determine the TPMI at least includes port quantity information required in uplink data transmission.

Optionally, when the computer program is executed by the processor 101, the following steps may be further performed: measuring an uplink demodulation reference signal DMRS and/or an SRS sent by the terminal, and determining, according to a measurement result, a TPMI and/or an RI required in uplink data transmission.

Optionally, the DCI further includes an SRI field or an SRI-RI field.

Optionally, an SRS resource indicated in the SRI field is used to determine a port quantity required in uplink data transmission, an SRS resource indicated in the SRI-RI field is used to determine a port quantity required in uplink data transmission, and an RI indicated in the SRI-RI field is used to determine an RI required in uplink data transmission.

An embodiment of this disclosure further provides a computer readable storage medium, where the computer readable storage medium stores a computer program, and when the computer program is executed by a processor, the processes of the embodiments of the foregoing uplink data transmission indication methods are implemented, and the same technical effects can be achieved. To avoid repetition, details are not described herein again. The computer readable storage medium is, for example, a read-only memory (Read-Only Memory, ROM), a random access memory (Random Access Memory, RAM), a magnetic disk, or an optical disc.

It should be noted that in this specification, the terms "comprise", "include" and any other variants thereof are intended to cover non-exclusive inclusion, so that a process, a method, an article, or an apparatus that includes a series of elements not only includes these very elements, but may also include other elements not clearly listed, or also include elements inherent to this process, method, article, or apparatus. Without being subject to further limitations, an element defined by a phrase "including a ..." does not exclude presence of other identical elements in the process, method, article, or apparatus that includes the very element.

Based on the foregoing descriptions of the implementation manners, a person skilled in the art may clearly understand that the methods in the foregoing embodiments may be implemented by software combined with a necessary universal hardware platform or certainly may be implemented by hardware. In most circumstances, the former is a preferred implementation manner. Based on such an understanding, the technical solutions of this disclosure essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network side device, or the like) to perform the methods described in the embodiments of this disclosure.

The embodiments of this disclosure are described above with reference to the accompanying drawings, but this disclosure is not limited to the foregoing specific implementation manners. The foregoing specific implementations are merely schematic instead of restrictive. Under enlightenment of this disclosure, a person of ordinary skills in the art may make many forms without departing from this disclosure and the protection scope of claims, all of which fall within the protection of this disclosure as defined by the appended claims.

## Claims

1. An uplink data transmission indication method, applied to a terminal, **characterized by** comprising:
receiving (21), from a network side device, downlink control information, DCI, used for scheduling uplink data transmission, wherein the DCI comprises at least one of a channel state information reference signal indicator, CRI, field and a synchronization signal block indicator, SSBRI, field, wherein at least one of the CRI field and the SSBRI field is used to indicate an optimal uplink transmit beam required in uplink data transmission; and
performing uplink data transmission in accordance with the optimal uplink transmit beam indicated by the DCI,
wherein before the step of receiving (21), from a network side device, DCI used for scheduling uplink data transmission, further comprising:
receiving first configuration information from the network side device, wherein the first configuration information comprises a group of channel state information reference signal, CSI-RS, resources and/or synchronization signal block, SSB, resources used to indicate the optimal uplink transmit beam.

2. The uplink data transmission indication method according to claim 1, wherein the DCI further carries at least one of a transmitted precoding matrix indicator, TPMI, and a rank indicator, RI, used for uplink data transmission.

3. The uplink data transmission indication method according to claim 2, wherein an uplink codebook indicated by the TPMI is a non-coherent codebook; or
a value of a rank indicated by the RI is 1.

4. The uplink data transmission indication method according to claim 2, wherein before the step of receiving (21), from a network side device, DCI used for scheduling uplink data transmission, further comprising:
receiving second configuration information from the network side device, wherein the second configuration information comprises information used to determine the TPMI, and the information used to determine the TPMI at least comprises port quantity information required in uplink data transmission.

5. The uplink data transmission indication method according to claim 1, further comprising:
determining at least one of a TPMI and a RI required in uplink data transmission.

6. An uplink data transmission indication method, applied to a network side device, **characterized by** comprising:
sending (51), to a terminal, DCI used for scheduling uplink data transmission, wherein the DCI comprises at least one of a CRI field and an SSBRI field,
wherein at least one of the CRI field and the SSBRI field is used to indicate an optimal uplink transmit beam required in uplink data transmission,
wherein before the step of sending (51), to a terminal, DCI used for scheduling uplink data transmission, further comprising:
sending, to the terminal, first configuration information, wherein the first configuration information comprises a group of CSI-RS resources and/or SSB resources used to indicate the optimal uplink transmit beam.

7. The uplink data transmission indication method according to claim 6, wherein the DCI further carries at least one of a TPMI and an RI used for uplink data transmission.

8. The uplink data transmission indication method according to claim 7, wherein an uplink codebook indicated by the TPMI is a non-coherent codebook; or
a value of a rank indicated by the RI is 1.

9. The uplink data transmission indication method according to claim 7, wherein before the step of sending (51), to a terminal, DCI used for scheduling uplink data transmission, further comprising:
sending second configuration information to the terminal, wherein the second configuration information comprises information used to determine the TPMI, and the information used to determine the TPMI at least comprises port quantity information required in uplink data transmission.

10. The uplink data transmission indication method according to claim 7, wherein before the step of sending (51), to a terminal, DCI used for scheduling uplink data transmission, further comprising:
measuring at least one of an uplink demodulation reference signal DMRS and an SRS sent by the terminal, and determining, according to a measurement result, at least one of a TPMI and an RI required in uplink data transmission.

11. A terminal, **characterized by** comprising:
a receiving module (61), configured to receive, from a network side device, DCI used for scheduling uplink data transmission, wherein the DCI comprises at least one of a CRI field and an SSBRI field, wherein at least one of the CRI field and the SSBRI field is used to indicate an optimal uplink transmit beam required in uplink data transmission; and
a processing module, configured to perform uplink data transmission in accordance with the optimal uplink transmit beam indicated by the DCI,
wherein the receiving module (61) is further configured to, before receiving the DCI used for scheduling uplink data transmission: receive first configuration information from the network side device, wherein the first configuration information comprises a group of channel state information reference signal, CSI-RS, resources and/or synchronization signal block, SSB, resources used to indicate the optimal uplink transmit beam.

12. The terminal according to claim 11, wherein the DCI further carries at least one of a transmitted precoding matrix indicator, TPMI, and a rank indicator, RI, used for uplink data transmission.

13. The terminal according to claim 12, wherein an uplink codebook indicated by the TPMI is a non-coherent codebook; or
a value of a rank indicated by the RI is 1.

14. The terminal according to claim 12, wherein the receiving module (61) is further configured to: receive second configuration information from the network side device, wherein the second configuration information comprises information used to determine the TPMI, and the information used to determine the TPMI at least comprises port quantity information required in uplink data transmission.

15. A network side device, **characterized by** comprising:
a sending module (71), configured to send, to a terminal, DCI used for scheduling uplink data transmission, wherein the DCI comprises at least one of a CRI field and an SSBRI field,
wherein at least one of the CRI field and the SSBRI field is used to indicate an optimal uplink transmit beam required in uplink data transmission; and
the sending module (71) is further configured to send, before sending the DCI used for scheduling uplink data transmission, to the terminal, first configuration information, wherein the first configuration information comprises a group of CSI-RS resources and/or SSB resources used to indicate the optimal uplink transmit beam.

## Patentansprüche

1. Uplink-Datenübertragung-Angabeverfahren, angewandt auf ein Endgerät, **dadurch gekennzeichnet, dass** es Folgendes umfasst:
Empfangen (21), von einer netzwerkseitigen Vorrichtung, von Downlink-Steuerinformationen, DCI, die zum Planen von Uplink-Datenübertragung verwendet werden, wobei die DCI mindestens eines von einem Feld eines Kanalzustandsinformation-Referenzsignalindikators, CRI, und einem Feld eines Synchronisationssignal-Blockindikators, SSBRI, umfasst, wobei mindestens eines von dem CRI-Feld und dem SSBRI-Feld verwendet wird, um einen optimalen Uplink-Sendestrahl anzugeben, der bei der Uplink-Datenübertragung erforderlich ist; und Ausführen der Uplink-Datenübertragung gemäß dem optimalen Uplink-Sendestrahl, der durch die DCI angegeben wird, wobei es vor dem Schritt eines Empfangens (21), von einer netzwerkseitigen Vorrichtung, der DCI, die zum Planen von Uplink-Datenübertragung verwendet werden, ferner Folgendes umfasst:
Empfangen erster Konfigurationsinformationen von der netzwerkseitigen Vorrichtung, wobei die ersten Konfigurationsinformationen eine Gruppe von Ressourcen von Kanalzustandsinformation-Referenzsignalen, CSI-RS, und/oder Ressourcen von Synchronisationssignalblöcken, SSB, umfassen, die verwendet werden, um den optimalen Uplink-Sendestrahl anzugeben.

2. Uplink-Datenübertragung-Angabeverfahren nach Anspruch 1, wobei die DCI ferner mindestens eines von einem übertragenen Vorcodierungsmatrixindikator, TPMI, und einem Rangindikator, RI, enthält, die für Uplink-Datenübertragung verwendet werden.

3. Uplink-Datenübertragung-Angabeverfahren nach Anspruch 2, wobei ein von dem TPMI angegebenes Uplink-Codebuch ein nichtkohärentes Codebuch ist; oder ein Wert eines Rangs, der durch den RI angegeben wird, 1 ist.

4. Uplink-Datenübertragung-Angabeverfahren nach Anspruch 2, wobei es vor dem Schritt eines Empfangens (21), von einer netzwerkseitigen Vorrichtung, der DCI, die zum Planen der Uplink-Datenübertragung verwendet werden, ferner Folgendes umfasst:
Empfangen zweiter Konfigurationsinformationen von der netzwerkseitigen Vorrichtung, wobei die zweiten Konfigurationsinformationen Informationen umfassen, die zum Bestimmen des TPMI verwendet werden, und die zum Bestimmen des TPMI verwendeten Informationen zumindest Port-Mengeninformationen umfassen, die bei Uplink-Datenübertragung erforderlich sind.

5. Uplink-Datenübertragung-Angabeverfahren nach Anspruch 1, ferner umfassend:
Bestimmen eines TPMI und/oder eines RI, die für Uplink-Datenübertragung erforderlich sind.

6. Uplink-Datenübertragung-Angabeverfahren, angewandt auf eine netzwerkseitige Vorrichtung, **dadurch gekennzeichnet, dass** es Folgendes umfasst:
senden (51), an ein Endgerät, von DCI, die zum Planen der Uplink-Datenübertragung verwendet werden, wobei die DCI mindestens eines von einem CRI-Feld und einem SSBRI-Feld umfassen, wobei mindestens eines von dem CRI-Feld und dem SSBRI-Feld verwendet wird, um einen optimalen Uplink-Sendestrahl anzugeben, der bei Uplink-Datenübertragung erforderlich ist, wobei es vor dem Schritt eines Sendens (51), an ein Endgerät, von DCI, die zum Planen von Uplink-Datenübertragung verwendet werden, ferner Folgendes umfasst:
Senden, an das Endgerät, von ersten Konfigurationsinformationen, wobei die ersten Konfigurationsinformationen eine Gruppe von CSI-RS-Ressourcen und/oder SSB-Ressourcen umfassen, die verwendet werden, um den optimalen Uplink-Sendestrahl anzugeben.

7. Uplink-Datenübertragung-Angabeverfahren nach Anspruch 6, wobei die DCI ferner mindestens einen TPMI und einen RI enthalten, die für Uplink-Datenübertragung verwendet werden.

8. Uplink-Datenübertragung-Angabeverfahren nach Anspruch 7, wobei ein von dem TPMI angegebenes Uplink-Codebuch ein nichtkohärentes Codebuch ist; oder ein Wert eines Rangs, der durch den RI angegeben wird, 1 ist.

9. Uplink-Datenübertragung-Angabeverfahren nach Anspruch 7, wobei es vor dem Schritt eines Sendens (51), an ein Endgerät, von DCI, die zum Planen von Uplink-Datenübertragung verwendet werden, ferner Folgendes umfasst:
senden von zweiten Konfigurationsinformationen an das Endgerät, wobei die zweiten Konfigurationsinformationen Informationen umfassen, die zum Bestimmen des TPMI verwendet werden, und die zum Bestimmen des TPMI verwendeten Informationen zumindest Port-Mengeninformationen umfassen, die bei Uplink-Datenübertragung erforderlich sind.

10. Uplink-Datenübertragung-Angabeverfahren nach Anspruch 7, wobei es vor dem Schritt eines Sendens (51), an ein Endgerät, von DCI, die zum Planen von Uplink-Datenübertragung verwendet werden, ferner Folgendes umfasst:
Messen eines Uplink-Demodulationsreferenzsignals DMRS und/oder eines von dem Endgerät gesendeten SRS und gemäß einem Messresultat Bestimmen eines TPMI und/oder eines RI, die bei Uplink-Datenübertragung erforderlich sind.

11. Endgerät, **dadurch gekennzeichnet, dass** es Folgendes umfasst:
ein Empfangsmodul (61), das konfiguriert ist, um von einer netzwerkseitigen Vorrichtung DCI zu empfangen, die zum Planen von Uplink-Datenübertragung verwendet werden, wobei die DCI mindestens eines von einem CRI-Feld und einem SSBRI-Feld umfassen, wobei mindestens eines von dem CRI-Feld und dem SSBRI-Feld verwendet wird, um einen optimalen Uplink-Sendestrahl anzugeben, der bei Uplink-Datenübertragung erforderlich ist; und
ein Verarbeitungsmodul, das konfiguriert ist, um eine Uplink-Datenübertragung gemäß dem optimalen Uplink-Sendestrahl auszuführen, der durch die DCI angegeben wird, wobei das Empfangsmodul (61) vor einem Empfangen der DCI, die zum Planen von Uplink-Datenübertragung verwendet werden, ferner zu Folgendem konfiguriert ist: Empfangen erster Konfigurationsinformationen von der netzwerkseitigen Vorrichtung, wobei die ersten Konfigurationsinformationen eine Gruppe von Ressourcen von Kanalzustandsinformation-Referenzsignalen, CSI-RS, und/oder Ressourcen von Synchronisationssignalblöcken, SSB, umfassen, die verwendet werden, um den optimalen Uplink-Sendestrahl anzugeben.

12. Endgerät nach Anspruch 11, wobei die DCI ferner mindestens eines von einem übertragenen Vorcodierungsmatrixindikator, TPMI, und einem Rangindikator, RI, enthält, die für Uplink-Datenübertragung verwendet werden.

13. Endgerät nach Anspruch 12, wobei ein von dem TPMI angegebenes Uplink-Codebuch ein nichtkohärentes Codebuch ist; oder
ein Wert eines Rangs, der durch den RI angegeben wird, 1 ist.

14. Endgerät nach Anspruch 12, wobei das Empfangsmodul (61) ferner zu Folgendem konfiguriert ist: Empfangen zweiter Konfigurationsinformationen von der netzwerkseitigen Vorrichtung, wobei die zweiten Konfigurationsinformationen Informationen umfassen, die zum Bestimmen des TPMI verwendet werden, und die zum Bestimmen des TPMI verwendeten Informationen zumindest Port-Mengeninformationen umfassen, die bei Uplink-Datenübertragung erforderlich sind.

15. Netzwerkseitige Vorrichtung, **dadurch gekennzeichnet, dass** sie Folgendes umfasst:
ein Sendemodul (71), das konfiguriert ist, um, an ein Endgerät, DCI zu senden, ie zum Planen von Uplink-Datenübertragung verwendet werden, wobei die DCI mindestens eines von einem CRI-Feld und einem SSBRI-Feld umfassen, wobei mindestens eines von dem CRI-Feld und dem SSBRI-Feld verwendet wird, um einen optimalen Uplink-Sendestrahl anzugeben, der bei Uplink-Datenübertragung erforderlich ist; und
wobei das Sendemodul (71) ferner konfiguriert ist, um vor einem Senden der DCI, die zum Planen von Uplink-Datenübertragung verwendet werden, erste Konfigurationsinformationen an das Endgerät zu senden, wobei die ersten Konfigurationsinformationen eine Gruppe von CSI-RS-Ressourcen und/oder SSB-Ressourcen umfassen, die verwendet werden, um den optimalen Uplink-Sendestrahl anzugeben.

## Revendications

1. Procédé de transmission en liaison montante, appliqué à un terminal, **caractérisé en ce qu'**il comprend :
la réception (21), en provenance d'un dispositif côté réseau, d'informations de commande de liaison descendante, DCI, utilisées pour programmer la transmission de données de liaison montante, dans lequel les DCI comprennent au moins l'un d'un champ d'indicateur de signal de référence d'information sur l'état du canal, CRI, et d'un champ d'indicateur de bloc de signal de synchronisation, SSBRI, dans lequel au moins l'un du champ CRI et du champ SSBRI est utilisé pour indiquer un faisceau d'émission de liaison montante optimal requis dans la transmission de données de liaison montante ; et la mise en oeuvre de la transmission de données de liaison montante conformément au faisceau de transmission de liaison montante optimal indiqué par les DCI, dans lequel, avant l'étape de réception (21), en provenance d'un dispositif côté réseau, les DCI utilisées pour programmer la transmission de données de liaison montante comprennent en outre :
la réception de premières informations de configuration en provenance du dispositif côté réseau, dans lequel les premières informations de configuration comprennent un groupe de ressources de signal de référence d'information sur l'état du canal, CSI-RS, et/ou de ressources de bloc de signal de synchronisation, SSB, utilisées pour indiquer le faisceau d'émission de liaison montante optimal.

2. Procédé d'indication de transmission de données de liaison montante selon la revendication 1, dans lequel les DCI comportent en outre au moins l'un d'un indicateur de matrice de précodage transmise, TPMI, et d'un indicateur de rang, RI, utilisés pour la transmission de données de liaison montante.

3. Procédé d'indication de transmission de données de liaison montante selon la revendication 2, dans lequel un livre de codes de liaison montante indiqué par le TPMI est un livre de codes non cohérent ; ou une valeur d'un rang indiqué par le RI est 1.

4. Procédé d'indication de transmission de données de liaison montante selon la revendication 2, dans lequel, avant l'étape de réception (21), en provenance d'un dispositif côté réseau, des DCI utilisées pour programmer la transmission de données de liaison montante, le procédé comprend en outre :
la réception de secondes informations de configuration en provenance du dispositif côté réseau, dans lequel les secondes informations de configuration comprennent des informations utilisées pour déterminer le TPMI, et les informations utilisées pour déterminer le TPMI comprennent au moins des informations de quantité de ports requises dans la transmission de données de liaison montante.

5. Procédé d'indication de transmission de données en liaison montante selon la revendication 1, comprenant en outre : la détermination d'au moins un d'un TPMI et d'un RI requis dans la transmission de données de liaison montante.

6. Procédé d'indication de transmission de données de liaison montante, appliqué à un dispositif côté réseau, **caractérisé en ce qu'**il comprend :
l'envoi (51), à un terminal, de DCI utilisées pour programmer la transmission de données de liaison montante, dans lequel les DCI comprennent au moins l'un d'un champ CRI et d'un champ SSBRI, dans lequel au moins l'un du champ CRI et du champ SSBRI est utilisé pour indiquer un faisceau d'émission de liaison montante optimal requis dans la transmission de données de liaison montante, dans lequel avant l'étape d'envoi (51), à un terminal, des DCI utilisées pour programmer la transmission de données de liaison montante, le procédé comprend en outre :
l'envoi, au terminal, de premières informations de configuration, dans lequel les premières informations de configuration comprennent un groupe de ressources CSI-RS et/ou de ressources SSB utilisées pour indiquer le faisceau d'émission de liaison montante optimal.

7. Procédé d'indication de transmission de données de liaison montante selon la revendication 6, dans lequel les DCI comportent en outre au moins l'un d'un TPMI et d'un RI utilisés pour la transmission de données de liaison montante.

8. Procédé d'indication de transmission de données de liaison montante selon la revendication 7, dans lequel un livre de codes de liaison montante indiqué par le TPMI est un livre de codes non cohérent ; ou une valeur d'un rang indiqué par le RI est 1.

9. Procédé d'indication de transmission de données de liaison montante selon la revendication 7, dans lequel, avant l'étape d'envoi (51), à un terminal, des DCI utilisées pour programmer la transmission de données de liaison montante, le procédé comprend en outre :
l'envoi de secondes informations de configuration au terminal, dans lequel les secondes informations de configuration comprennent des informations utilisées pour déterminer le TPMI, et les informations utilisées pour déterminer le TPMI comprennent au moins des informations de quantité de ports requises dans la transmission de données de liaison montante.

10. Procédé d'indication de transmission de données de liaison montante selon la revendication 7, dans lequel, avant l'étape d'envoi (51), à un terminal, des DCI utilisées pour programmer la transmission de données de liaison montante, le procédé comprend en outre :
la mesure d'au moins l'un d'un signal de référence de démodulation de liaison montante DMRS et d'un SRS envoyés par le terminal, et la détermination, en fonction d'un résultat de mesure, d'au moins l'un d'un TPMI et d'un RI requis dans la transmission de données de liaison montante.

11. Terminal, **caractérisé en ce qu'**il comprend :
un module de réception (61), configuré pour recevoir, en provenance d'un dispositif côté réseau, des DCI utilisées pour programmer la transmission de données de liaison montante, dans lequel les DCI comprennent au moins l'un d'un champ CRI et d'un champ SSBRI, dans lequel au moins l'un du champ CRI et du champ SSBRI est utilisé pour indiquer un faisceau d'émission de liaison montante optimal requis dans la transmission de données de liaison montante ; et
un module de traitement, configuré pour effectuer une transmission de données de liaison montante conformément au faisceau d'émission de liaison montante optimal indiqué par les DCI, dans lequel le module de réception (61) est en outre configuré pour, avant de recevoir les DCI utilisées pour programmer la transmission de données de liaison montante : recevoir de premières informations de configuration en provenance du dispositif côté réseau, dans lequel les premières informations de configuration comprennent un groupe de ressources de signal de référence d'information sur l'état du canal, CSI-RS, et/ou de ressources de bloc de signal de synchronisation, SSB, utilisées pour indiquer le faisceau d'émission de liaison montante optimal.

12. Terminal selon la revendication 11, dans lequel les DCI comportent en outre au moins l'un d'un indicateur de matrice de précodage transmise, TPMI, et d'un indicateur de rang, RI, utilisés pour la transmission de données de liaison montante.

13. Terminal selon la revendication 12, dans lequel un livre de codes de liaison montante indiqué par le TPMI est un livre de codes non cohérent ; ou
la valeur d'un rang indiqué par le RI est de 1.

14. Terminal selon la revendication 12, dans lequel le module de réception (61) est en outre configuré pour : recevoir de secondes informations de configuration en provenance du dispositif côté réseau, dans lequel les secondes informations de configuration comprennent des informations utilisées pour déterminer le TPMI, et les informations utilisées pour déterminer le TPMI comprennent au moins des informations de quantité de ports requises dans la transmission de données de liaison montante.

15. Dispositif côté réseau, **caractérisé en ce qu'**il comprend :
un module d'envoi (71), configuré pour envoyer, à un terminal, des DCI utilisées pour programmer la transmission de données de liaison montante, dans lequel les DCI comprennent au moins l'un d'un champ CRI et d'un champ SSBRI, dans lequel au moins l'un du champ CRI et du champ SSBRI est utilisé pour indiquer un faisceau d'émission de liaison montante optimal requis dans la transmission de données de liaison montante ; et
le module d'envoi (71) est en outre configuré pour envoyer au terminal, avant l'envoi des DCI utilisées pour programmer la transmission de données de liaison montante, de premières informations de configuration, dans lequel les premières informations de configuration comprennent un groupe de ressources CSI-RS et/ou de ressources SSB utilisées pour indiquer le faisceau d'émission de liaison montante optimal.
